# EUROPEAN PATENT SPECIFICATION

(11) **EP 3 968 028 B1**
(45) Date of publication and mention of the grant of the patent: **15.05.2024**
(21) Application number: 20306034.8
(22) Date of filing: 15.09.2020
(51) Int. Cl.: G01N 35/00, G01N 35/02, G01N 35/04

(54) **APPARATUS FOR AUTOMATIC HANDLING OF A SAMPLE**
VORRICHTUNG ZUR AUTOMATISCHEN HANDHABUNG EINER PROBE
APPAREIL DE GESTION AUTOMATIQUE D'UN ÉCHANTILLON

(43) Date of publication of application: 16.03.2022
(73) Proprietor: Bio-Rad Europe GmbH, 4051 Basel (CH)
(72) Inventor: BERNAY, Sébastien, 4051 Basel (CH); BARNAY, Thomas, 4051 Basel (CH); FAURE-VIDAL Anaïs, 4051 Basel (CH)
(74) Representative: Cabinet Beau de Loménie

(56) References cited:
- EP-A1- 3 153 864
- EP-B1- 0 628 824
- WO-A1-2008/123882
- CN-U- 207 366 315
- US-A1- 2009 280 572

## Description

### FIELD

The present disclosure relates generally to the field of laboratory work, and in particular to handling, processing, and preparing biological samples within a laboratory. More specifically, the present disclosure relates to automatic handling, processing, and preparing of biological samples within an apparatus having improved compactness and a method thereof.

### BACKGROUND

Many aspects of laboratory work increasingly rely upon the usage of automation. A significant factor for the use of automation is that machines are capable of performing repetitive, high-precision tasks which require numerous movements or steps without tiring. Another benefit of using automation is that human exposure and contamination of biological samples may be minimized. International Patent Application Publication No. WO2008123882A1 discloses a robotic system for automated transfer of samples or specimens from an initial container or receptacle to a destination container or receptacle for further processing, assays, analysis, archiving, or other uses or purposes. Document CN 207366315U discloses another processing apparatus that comprises a hollow carousel and a centrifuge located below the carousel.

However, usage of conventional automated laboratory equipment may necessitate multiple, separate devices in order to complete one or more tasks. Additionally, usage of conventional automated laboratory equipment may require the use of devices which occupy a large amount of valuable space within a laboratory. Each of the aforementioned disadvantages may lead to higher costs and less efficiency, which in turn may outweigh the benefits of automation, especially for small or midsize laboratories.

Accordingly, it is desirable to provide an improved apparatus in a manner that fulfills one or more of the needs described above.

### SUMMARY

According to aspects of the present disclosure, an apparatus for automatic handling of a sample within a receptacle is provided according to claim 1. The dependent claims 2-12 defines preferred implementations of the invention.

According to aspects of the present disclosure, a method of automatically handling a sample is provided according to claim 13.

In the manner described above and disclosed herein, the apparatus is configured to complete more than one task while also maintaining a reduced size of the apparatus-thereby increasing efficiency in the automatic handling, processing, and preparing of a biological sample.

### BRIEF DESCRIPTION OF THE DRAWINGS

Aspects of an embodiment will be described in reference to the drawings, where like numerals reflect like elements:
Figure 1 is a front perspective view of the apparatus according to aspects of the present disclosure;
Figure 2 is a front perspective cross-sectional view of the apparatus of Figure 1, taken along a common axis A-A;
Figure 3 is a top view of the apparatus of Figure 1;
Figure 4 is a side view of the apparatus of Figure 1, without a base or centrifuge of the apparatus;
Figure 5 is a front perspective view of the apparatus of Figure 1, illustrating an incubator plate of the apparatus in a second position; and
Figure 6 is a front perspective view of the apparatus of Figure 1, including a housing of the apparatus.

### DETAILED DESCRIPTION

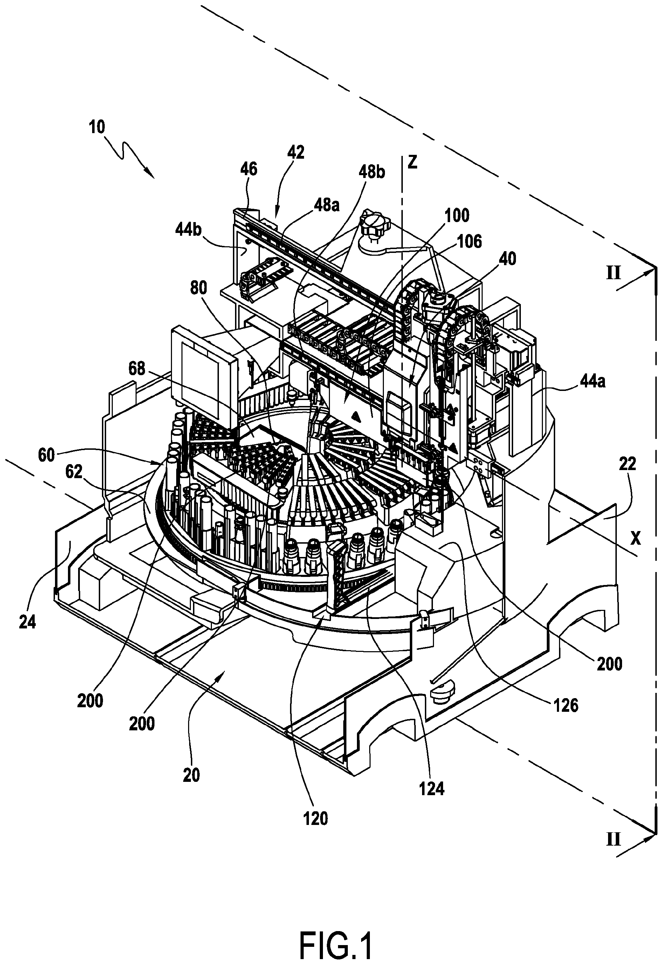

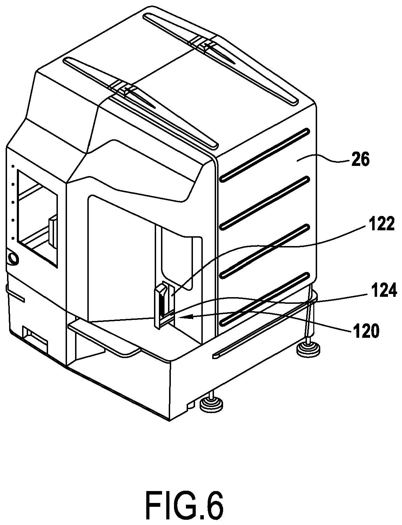

An embodiment of the apparatus for automatic handling of a sample (hereafter, "the apparatus") according to aspects of the disclosure will now be described with reference to Figures 1-6, wherein like numerals represent like parts, and will generally be referred to by the reference numeral 10. Although the apparatus 10 is described with reference to specific examples, it should be understood that modifications and changes may be made to these examples without going beyond the general scope as defined by the claims. In particular, individual characteristics of the various embodiments shown and/or mentioned herein may be combined in additional embodiments. Consequently, the description and the drawings should be considered in a sense that is illustrative rather than restrictive. The Figures, which are not necessarily to scale, depict illustrative aspects and are not intended to limit the scope of the disclosure. The illustrative aspects depicted are intended only as exemplary.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to the particular embodiment(s) described. On the contrary, the intention of this disclosure is to cover all modifications, equivalents, and alternatives falling within the scope of the disclosure.

Various materials, methods of construction and methods of fastening will be discussed in the context of the disclosed embodiment(s). Those skilled in the art will recognize known substitutes for the materials, construction methods, and fastening methods, all of which are contemplated as compatible with the disclosed embodiment(s) and are intended to be encompassed by the appended claims.

As used in this disclosure and the appended claims, the singular forms "a," "an," and "the" include plural referents unless the content clearly dictates otherwise. As used in this disclosure and the appended claims, the term "or" is generally employed in its sense including "and/or" unless the content clearly dictates otherwise.

Throughout the description, including the claims, the terms "comprising a," "including a," and "having a" should be understood as being synonymous with "comprising one or more," "including one or more," and "having one or more" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially," "approximately," and "generally" should be understood to mean falling within such accepted tolerances.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like fashion (e.g., "between" versus "directly between," "adjacent" versus "directly adjacent," etc.).

Spatially relative terms, such as "top," "bottom," "middle," "inner," "outer," "beneath," "below," "lower," "above," "upper," and the like, may be used herein for ease of description to describe one element or feature's relationship to another element(s) or feature(s) as illustrated in the drawings. Spatially relative terms may be intended to encompass different orientations of a device in use or operation in addition to the orientation depicted in the drawings. For example, if the device in the drawings is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although the terms "first," "second," etc. may be used herein to describe various elements, components, regions, layers, sections, and/or parameters, these elements, components, regions, layers, sections, and/or parameters should not be limited by these terms. These terms are only used to distinguish one element, component, region, layer, or section from another region, layer, or section. Thus, a first element, component, region, layer, or section discussed herein could be termed a second element, component, region, layer, or section without departing from the teachings of the present inventive subject matter.

As shown in Figures 1-2, the apparatus 10 may be contemplated for use with a sample held within a receptacle 200, such as a sample held within a gel card, test tube, vial, or the like. In the disclosed embodiment, the apparatus 10 is configured to handle a plurality of receptacles 200, however, the plurality of receptacles 200 will be referred to as "a receptacle 200" or "the receptacle 200" for clarity, unless the relationship described necessitates reference to "a plurality of receptacles 200" or "the plurality of receptacles 200." As such, reference to "a receptacle 200" or "the receptacle 200" should be understood to mean "one or more receptacles 200." Referring to Figures 1-3 and 6, the apparatus 10 includes a base 20 having a first end 22 and a second end 24, a common axis A-A extending laterally between the first and second ends 22, 24 of the base 20, and a housing 26 extending from the base 20. Within the housing 26, the apparatus 10 includes a carrier 40 for transporting the receptacle 200, an annular carousel 60 for storage of the receptacle 200, a centrifuge 80 for separating parts of the sample within the receptacle 200, an incubator 100 for heating the sample within the receptacle 200, and a loading station 120 for intake of the receptacle 200 into the apparatus 10. The carrier 40, the carousel 60, the centrifuge 80, and the incubator 120 are arranged in a layered, vertically-spaced configuration and to function along the common axis A-A to reduce unutilized space within the housing 26 and improve compactness of the apparatus 10.

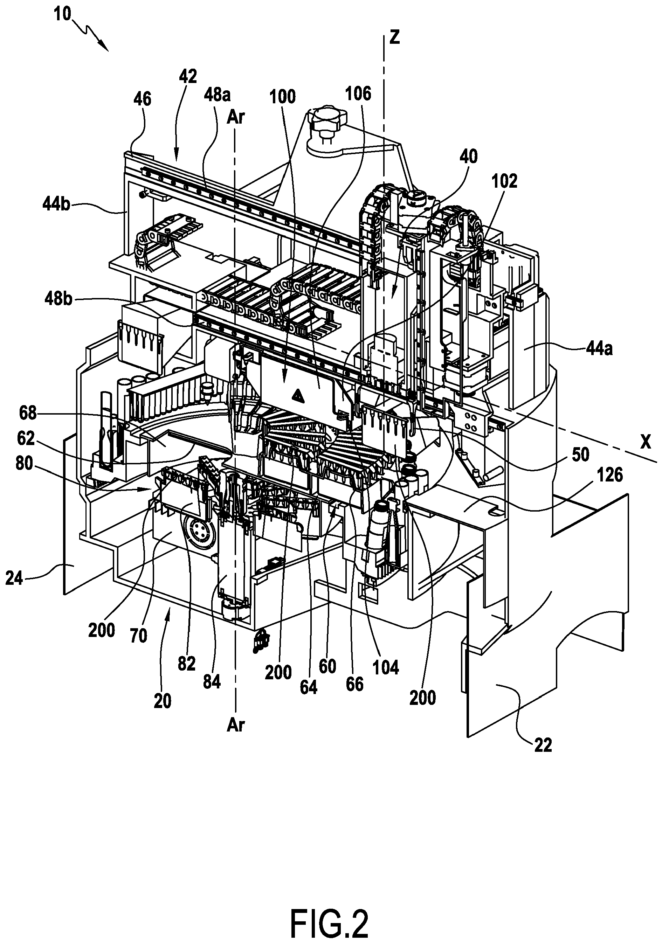

Referring to in Figure 2, the carrier 40 is configured to transport the receptacle 200 from a first location and/or position to a second location and/or position within the apparatus 10. Though only two locations are referred to herein, it should be understood that the first location and second location are referred to generally to mean a starting location and a destination location, respectively. Therefore, after a transport is carried out, the second location may become the first location and a new location or the previous first location may become the second location. The carrier 40 is configured to operate on a support 42 having a first upright post 44a and a second upright support post 44b, a horizontal support bar 46 extending between the first and second upright support posts 44a, 44b, and a pair of parallel linear rails 48a, 48b extending between the first and second upright support posts 44a, 44b. In the disclosed embodiment, the carrier 40 is a linear robotic device having a gripper 50 for grasping and handling the receptacle 200. In the disclosed embodiment, the linear robotic device is an XZ-type Cartesian robot configured to only move or translate along X (horizontal) and Z (vertical) coordinate axes on the linear rails 48a, 48b. The XZ-type Cartesian robot is fixed with respect to any possible third axis. In the disclosed embodiment, the X coordinate axis is parallel to the common axis A-A and the Z coordinate axis is perpendicular to the common axis A-A and to the X coordinate axis. The linear robotic device has a line of operation which is defined by the X and Z coordinate axes. In conventional conditions of use of the apparatus 10, the X coordinate axis is a horizontal axis, and the Z coordinate axis is a vertical axis. Movement of the linear robotic device moves the carrier 40 within the line of operation so that the carrier 40 is capable of transporting the receptacle 200 within the line of operation. The line of operation also corresponds to the common axis A-A. Particularly, the line of operation is within the same axial plane as the common axis A-A.

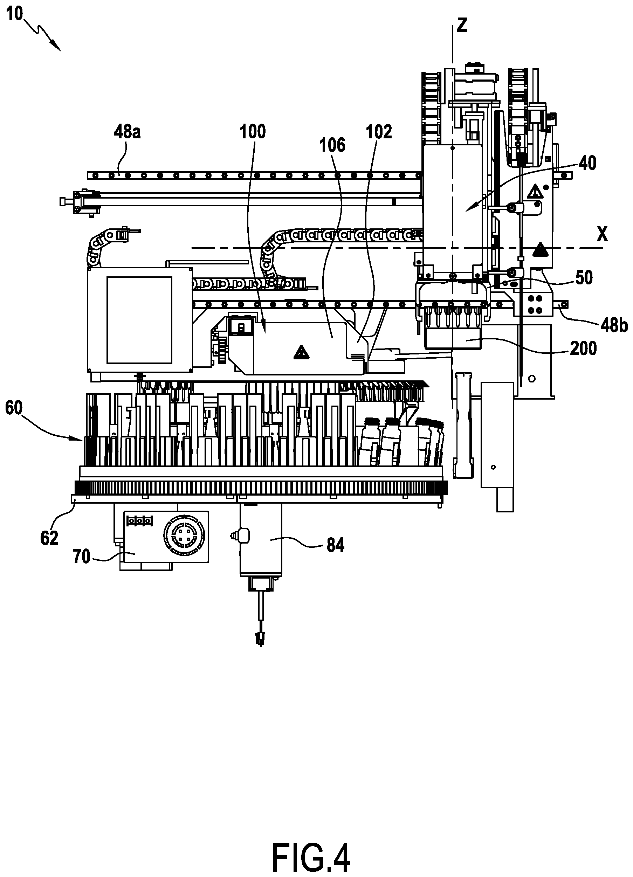

As shown in Figures 1-3, the carousel 60 is centered about an axis of rotation A_{R} (see Figure 2) and configured to rotate through the common axis A-A, which intersects the carousel 60. In the disclosed embodiment, the axis of rotation A_{R} intersects the common axis A-A. The carousel 60 is arranged between the first and second upright support posts 44a, 44b. The carousel 60 is spaced apart from the carrier 40, the centrifuge 80, and the incubator 100 along the direction defined by the Z coordinate axis, with the carrier 40 and the incubator 100 located above the carousel 60 and the centrifuge 80 arranged below the carousel 60, along the Z coordinate axis. In the disclosed embodiment, the base 20 is considered at or near a bottom of the apparatus and any location above the support 42 is considered at or near a top of the apparatus 10. As such, reference to a position "above" should be understood to mean a position closer to the top of the apparatus 10 and a position "below" should be understood to mean a position closer to the bottom of the apparatus 10. The carousel 60 includes a rotatable base plate 62 and one or more trays 64 arranged upon the rotatable base plate 62. The rotatable base plate 62 may, for instance, comprise slots or arrangements configured to accommodate the trays 64 to hold the trays 64 when the rotatable base plate 62 rotates. In the disclosed embodiment, the carousel 60 includes a plurality of trays 64. Each tray 64 is configured to be manually removable from the apparatus 10 by a user of the apparatus 10. Each tray 64 includes one or more first compartments 66 configured to receive the receptacle 200. In the disclosed embodiment, each tray 64 includes a plurality of first compartments 66. Each first compartment 66 is configured to have a radial position aligned with a radius of the carousel 60. In operation, the carousel 60 is configured to rotate about the common axis A-A so that the radial position of a chosen first compartment 66 holding the receptacle 200 is capable of aligning with and/or is aligned with the common axis A-A and the line of operation at a carousel 60 transport position for transport by the carrier 40. Together, the trays 64 form an inner annular array of first compartments 66 concentric with an outer annular array of first compartments 66. The base plate 62 of the carousel 60 defines a void 68 extending along a radius of the carousel 60 in communication with the centrifuge 80, which allows the carrier 40 to access the centrifuge 80 through the carousel 60. As shown in Figures 2 and 4, the carousel 60 is driven by a motor 70 which is positioned beneath the centrifuge 80 along or adjacent to the axis A-A. The motor 70 can, for instance, drive the carousel 60 through engagement means which are provided on an outer radius of the carousel 60, to account for the centrifuge 80 being located between the motor 70 and the carousel 60.

As shown in Figure 2, the centrifuge 80 is also supported by the base 20, centered about the axis of rotation A_{R} and configured to rotate (spin) about the common axis A-A, which intersects the centrifuge 80. The centrifuge 80 is arranged beneath the rotatable base plate 62 of the carousel 60 and includes one or more second compartments 82 for receiving the receptacle 200. In the disclosed embodiment, the centrifuge 80 includes a plurality of second compartments 82. Each second compartment 82 of the centrifuge 80 is configured to have a radial position aligned with a radius of the centrifuge 80. In operation, the centrifuge 80 is configured to rotate about the axis of rotation A_{R} so that the radial position of a chosen second compartment 82 of the centrifuge 80 is capable of aligning with and/or is aligned with the void 68, the common axis A-A, and the line of operation at a centrifuge 80 transport position for transport by the carrier 40. The centrifuge 80 is driven by a motor 84 which is separate from the motor 70 of the carousel 60. The centrifuge 80 is arranged between the motor 70 of the carousel 60 and the carousel 60 to allow the centrifuge 80 to be vertically-spaced from the carousel 60, concentrically about the same axis of rotation A_{R} as the carousel 60, and/or so that the centrifuge 80 is accessible through the void 68 defined by the rotatable base plate 62 of the carousel 60.

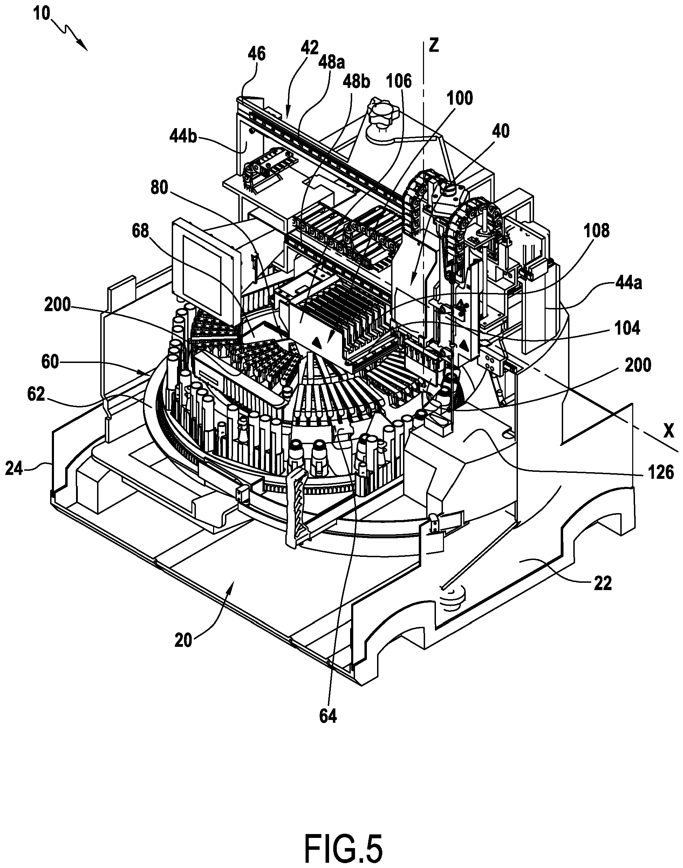

As shown in Figures 1-3 and 5, the incubator 100 is arranged on the support 42 above the carousel 60 and between the first and second upright support posts 44a, 44b. The incubator 100 is included on the support 42 along the common axis A-A, which intersects the incubator 100, so that the incubator 100 may receive the receptacle 200 from the carrier 40 or make the receptacle 200 available to the carrier 40. The incubator 100 includes an incubator housing 102 and an incubator plate 104 having a wall 106 which closes off an interior of the incubator 100 from the surrounding environment within the apparatus 10. In the disclosed embodiment, the incubator housing 102, the incubator plate 104, and/or the wall 106 include a seal (not shown) to separate the interior of the incubator 100 from the surrounding environment within the apparatus 10. Separation of the interior of the incubator from the surrounding environment allows for homogeneous heating and increased energy efficiency of the incubator 100. The incubator plate 104 includes one or more third compartments 108 for receiving the receptacle 200. In the disclosed embodiment, the incubator plate 104 includes a plurality of third compartments 108. The incubator plate 104 is configured to move, for instance by translation, between a first (heating) position and a second (non-heating) position. In the first position, the incubator plate 104 and the third compartments 108 are positioned within the interior of the incubator housing 102 to heat the receptacle 200 if the receptacle 200 is within the third compartments 108 or when the incubator 100 is in an inactive state if the receptacle 200 is not within the third compartments 108. In the second position, the incubator plate 104 and the third compartments 108, or at least a portion thereof, are positioned at an exterior of the incubator housing 102 so that at least one or all of the third compartments 108 are in alignment with the axis A-A and the line of operation at an incubator 100 transport position for transport by the carrier 40 (see Figure 5). The third compartments 108 and/or the receptacle 200 held by the third compartments 108 of the incubator plate 104 are made available to the carrier 40 before or after heating, respectively, in the second position. In this manner, the carrier 40 may transport the receptacle 200 to the third compartments 108 of the incubator plate 104 to be heated or transport the receptacle 200 that has been heated from the third compartments 108 of the incubator plate 104.

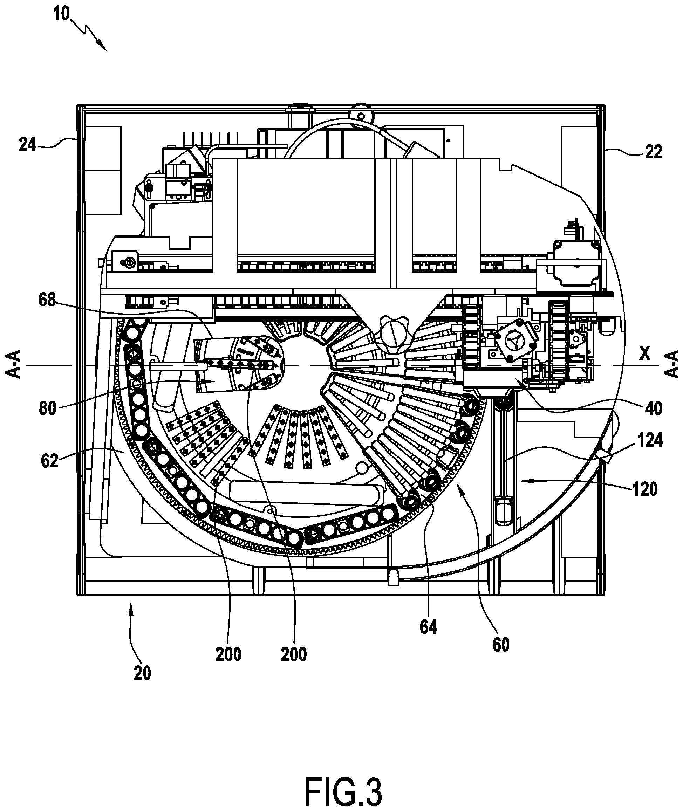

As shown in Figure 3, the loading station 120 is configured to receive the receptacle 200 through an opening 122 defined by the housing 26. The loading station 120 includes a track 124 extending from the opening 122 to guide the receptacle 200 from intake through the opening 122 to a loading station 120 transport position in which the receptacle 200 is at least partially aligned with the axis A-A and within the line of operation for transport by the carrier 40. Therefore, receptacle 200 at least partially overlaps the common axis A-A and the line of operation, so that the receptacle 200 is grasped by the carrier 40. The receptacle 200 is, for instance, centered on the axis A-A and the line of operation. It is contemplated that the track 124 may include a conveyor (not shown) which moves the receptacle 200 from the opening 122 to the loading station 120 transport position. In the disclosed embodiment, the loading station 120 is arranged independent of other processes within the apparatus 10, such as rotation of the carousel 60 and/or the centrifuge 80 and heating within the incubator 100, which allows for continuous loading of the receptacle 200 in the loading station 120. In the disclosed embodiment, the loading station 120 is capable of receiving one or more containers (not shown) each holding a plurality of receptacles 200. The loading station 120 may include an identification system 126 to determine the identity of the container and/or the receptacle 200 during intake of the receptacle 200. The identification system 126 includes a reader (not shown) configured to acquire data relating to the receptacle 200 which is presented on and/or communicated by the receptacle 200 and an analyzer (not shown) configured to interpret the data relating to the receptacle 200 to determine the identity of the receptacle 200 based upon the data acquired by the reader. In the disclosed embodiment, the container and/or the receptacle 200 includes a barcode and the reader and the analyzer are a barcode reader and a barcode decoder, however, it is contemplated that other identification systems may be compatible with the apparatus 10, such as an RFID tag. The loading station 120 may also be used as an unloading station; the track 124 may be used to unload the receptacle 200 from the apparatus 10, for instance, once the contents of the receptacle 200 have been processed or upon request from a user.

As illustrated by Figures 1-4, in operation, the receptacle 200 is inserted into the opening 122 defined by the housing 26. Upon intake of the receptacle 200, the identification system 126 acquires data presented on the receptacle 200. Once the identity of the receptacle 200 is determined, the receptacle 200 is moved along the track 124 to the loading station 120 transport position (first position). The carrier 40 translates along the X coordinate axis on the linear rails 48a, 48b to a location above the loading station 120 transport position and translates along the Z coordinate axis to the loading station 120 transport position. At the loading station 120 transport position, the gripper 50 of the carrier 40 grasps the receptacle 200 to remove the receptacle 200 from the loading station 120 transport position. The carrier 40 then translates along the Z coordinate axis to the location above the loading station 120 transport position and translates along the X coordinate axis to a position above one of the carousel 60 transport position, the centrifuge 80 transport position, or the incubator 100 transport position. The carousel 60 and/or the centrifuge 80 may be rotated so as to place a first compartment 66 or second compartment 82 in the carousel 60 transport position or the centrifuge 80 transport position, respectively, so that the carousel 60 or the centrifuge 80 presents a compartment to accommodate the receptacle 200 held by the carrier 40. The carrier 40 then translates along the Z coordinate axis to one of the carousel 60 transport position, the centrifuge 80 transport position, or the incubator 100 transport position to deposit the receptacle 200 in one of the first compartment 66, the second compartment 82, or the third compartment 108 (second position). Once the receptacle 200 has been processed in one of the carousel 60, the centrifuge 80, or the incubator 100, the receptacle 200 is returned to one of the carousel 60 transport position by rotation of the carousel 60, the centrifuge 80 transport position by rotation of the centrifuge 80, or the incubator 100 transport position by movement of the incubator plate 104 from the first position to the second position. In the same manner described for movement of the receptacle 200 from the loading station 120 transport position (first position) to one of the first compartment 66, the second compartment 82, or the third compartment 108 (second position), the carrier 40 then moves within the line of operation along the X and Z coordinate axes to remove the receptacle 200 from one of the carousel 60 transport position/first compartment 66, the centrifuge 80 transport position/second compartment 82, or the incubator transport 100 position/third compartment 108 (first position) and deposit the receptacle 200 at one of the carousel 60 transport position/first compartment 66, the centrifuge 80 transport position/second compartment 82, or the incubator transport 100 position/third compartment 108 or in the track 124 of the loading station 120, which can then be activated to unload the receptacle 200. The above steps may be repeated as many times as is necessary in order to handle, prepare, and process the receptacle 200 as desired by the user.

It is intended that the specification and examples be considered as exemplary only, with a true scope of the disclosure being indicated by the following claims.

Additionally, all of the disclosed features of an apparatus may be transposed, alone or in combination, to a method and vice versa.

## Claims

1. An apparatus (10) for automatic handling of a sample within a receptacle (200), said apparatus having an axis (A-A) and comprising:
a base (20) having a first end (22) and a second end (24), said axis (A-A) extending laterally between the first and second ends;
a carousel (60) supported on the base and intersected by the axis (A-A) said carousel being configured to rotate about an axis of rotation (A_{R}); and
a support (42) extending above the carousel between the first and second ends of the base, said support including a carrier (40) configured to move along X, Z coordinate axes to transport receptacles from a first location to a second location;
wherein, said X coordinate axis is parallel to the axis (A-A), said Z coordinate axis is perpendicular to the axis (A-A) and to the X coordinate axis, and said X and Z coordinate axes define a line of operation, and
wherein, the apparatus is configured so that rotation of the carousel aligns a receptacle with the line of operation of the carrier to allow the carrier to transport the receptacle from the first location to the second location; wherein the apparatus (10) further comprises a centrifuge (80);
**characterized in that** the centrifuge (80) is positioned below the carousel (60) along the axis (A-A), the centrifuge and the carousel are each configured to rotate about a same axis of rotation (A_{R}), and the carousel defines a void (68) to allow access to the centrifuge through the carousel.

2. The apparatus (10) of claim 1, wherein the line of operation of the carrier (40) is within the same axial plane as the axis (A-A).

3. The apparatus (10) of any of claims 1-2, wherein the support (42) includes a first upright post (44a) and a second upright post (44b) fixed to the base (20), and the carousel (60) is arranged between the first and second upright posts.

4. The apparatus (10) of any of claims 1-3, wherein the carousel (60) comprises a base plate (62) and one or more trays (64) adapted to be arranged on the base plate, and each tray defines one or more compartments (66) adapted to receive the receptacles (200).

5. The apparatus (10) of claim 4, wherein the carousel (60) is configured such that the Z coordinate axis is perpendicular to the carousel (60), and each compartment (66) is capable of aligning with the axis (A-A).

6. The apparatus (10) of claim 4, wherein each tray (64) is configured to be manually removable from the apparatus by a user.

7. The apparatus (10) of any one of claims 1-6, wherein the carrier (40) is a robotic device configured to translate along the X, Z coordinate axes within the line of operation corresponding to the axis (A-A).

8. The apparatus (10) of any one of claims 1-7, wherein the support (42) includes an incubator (100) positioned above the carousel (60) along the axis (A-A), said incubator comprising an incubator housing (102) and an incubator plate (104), said incubator plate being configured to hold the receptacles (200) and to be movable between a first position in which the incubator plate is within the incubator housing and a second position in which the incubator plate moves out of the incubator housing.

9. The apparatus (10) of any of claims 1-9, further comprising a housing (26) and a loading station (120) adapted to receive the receptacles (200), said housing defining an opening (122) to the loading station, said loading station being configured to move the receptacles from the opening to a transport position in which one or more receptacles are at least partially within the line of operation.

10. The apparatus (10) of claim 9, wherein the loading station (120) includes an identification system (126) comprising a reader configured to acquire data relating to the receptacles (200) in the loading station and an analyzer configured to interpret the data acquired by the reader to determine the identity of the receptacles.

11. The apparatus (10) of any of claims 1-10, wherein the carousel (60) includes a motor (70) and the motor is positioned below the carousel (60).

12. The apparatus (10) of any of claims 1-11, wherein the centrifuge and the carousel (60) are each driven by separate motors (70, 84), and the centrifuge is located between the carousel and the motor used to drive the carousel.

13. A method of automatically handling a receptacle (200) in the apparatus (10) according to any of claims 1-12, said method comprising:
rotating the carousel (60) to align the receptacle with the axis (A-A) and the line of operation of the carrier (40);
gripping the receptacle with the carrier at the first location; and
transporting the receptacle from the first location to the second location.

## Patentansprüche

1. Vorrichtung (10) zur automatischen Handhabung einer Probe innerhalb eines Behälters (200), wobei die Vorrichtung eine Achse (A-A) aufweist und Folgendes umfasst:
eine Basis (20) mit einem ersten Ende (22) und einem zweiten Ende (24), wobei sich die Achse (A-A) seitlich zwischen dem ersten und dem zweiten Ende erstreckt;
ein Karussell (60), das auf der Basis gestützt und von der Achse (A-A) geschnitten ist, wobei das Karussell konfiguriert ist, um sich um eine Drehachse (A_{R}) zu drehen, und
eine Stütze (42), die sich über dem Karussell zwischen dem ersten und zweiten Ende der Basis erstreckt, wobei die Stütze einen Träger (40) beinhaltet, der konfiguriert ist, um sich entlang der Koordinatenachsen X, Z zu bewegen, um Behälter von einem ersten Standort zu einem zweiten Standort zu transportieren;
wobei die Koordinatenachse X parallel zur Achse (A-A) ist, die Koordinatenachse Z senkrecht zu Achse (A-A) und zur Koordinatenachse X ist, und die Koordinatenachse X und Z eine Betriebsstrecke definieren, und
wobei die Vorrichtung so konfiguriert ist, dass die Drehung des Karussells einen Behälter mit der Betriebsstrecke des Trägers ausfluchtet, um dem Träger zu ermöglichen, den Behälter vom ersten Standort zum zweiten Standort zu transportieren, wobei die Vorrichtung (10) weiter eine Zentrifuge (80) umfasst,
**dadurch gekennzeichnet, dass** die Zentrifuge (80) unter dem Karussell (60) entlang der Achse (A-A) positioniert ist, wobei die Zentrifuge und das Karussell jeweils konfiguriert sind, um sich um eine gleiche Drehachse (A_{R}) zu drehen, und das Karussell einen Hohlraum (68) definiert, um den Zugang auf die Zentrifuge durch das Karussell zu ermöglichen.

2. Vorrichtung (10) nach Anspruch 1, wobei die Betriebsstrecke des Trägers (40) innerhalb der gleichen axialen Ebene wie die Achse (A-A) liegt.

3. Vorrichtung (10) nach einem der Ansprüche 1 - 2, wobei der Träger (42) eine erste Standsäule (44a) und eine zweite Standsäule (44b) beinhaltet, die an die Basis (20) fixiert ist, und das Karussell (60) zwischen der ersten und zweiten Standsäule angeordnet ist.

4. Vorrichtung (10) nach einem der Ansprüche 1 - 3, wobei das Karussell (60) eine Basisplatte (62) und eine oder mehrere Ablage(n) (64) umfasst, die ausgelegt ist/sind, um auf der Basisplatte angeordnet zu sein, und jede Ablage ein oder mehrere Abteile (66) definiert, das/die ausgelegt ist/sind, um die Behälter (200) aufzunehmen.

5. Vorrichtung (10) nach Anspruch 4, wobei das Karussell (60) derart konfiguriert ist, dass die Koordinatenachse Z senkrecht zum Karussell (60) ist und jedes Abteil (66) dazu in der Lage ist, sich mit der Achse (A-A) auszufluchten.

6. Vorrichtung (10) nach Anspruch 4, wobei jede Ablage (64) konfiguriert ist, um durch einen Benutzer manuell von der Vorrichtung entfernt zu werden.

7. Vorrichtung (10) nach einem der Ansprüche 1 - 6, wobei der Träger (40) ein Robotergerät ist, das konfiguriert ist, um sich entlang der Koordinatenachse X, Z innerhalb der Betriebsstrecke zu bewegen, die der Achse (A-A) entspricht.

8. Vorrichtung (10) nach einem der Ansprüche 1 - 7, wobei die Stütze (42) einen Inkubator (100) beinhaltet, der über dem Karussell (60) entlang der Achse (A-A) positioniert ist, wobei der Inkubator ein Inkubatorgehäuse (102) und eine Inkubatorplatte (104) umfasst, wobei die Inkubatorplatte konfiguriert ist, um die Behälter (200) zu halten und zwischen einer ersten Position, in der sich die Inkubatorplatte innerhalb des Inkubatorgehäuses befindet, und einer zweiten Position beweglich zu sein, in der sich die Inkubatorplatte aus dem Inkubatorgehäuse heraus bewegt.

9. Verfahren (10) nach einem der Ansprüche 1 - 9, weiter umfassend ein Gehäuse (26) und eine Ladestation (120), die ausgelegt sind, um die Behälter (200) aufzunehmen, wobei das Gehäuse eine Öffnung (122) in der Ladestation definiert, wobei die Ladestation konfiguriert ist, um die Behälter von der Öffnung in eine Transportposition zu bewegen, in der sich ein oder mehrere Behälter mindestens teilweise innerhalb der Betriebsstrecke befinden.

10. Vorrichtung (10) nach Anspruch 9, wobei die Ladestation (120) ein Identifizierungssystem (126) beinhaltet, umfassend eine Ablesevorrichtung, die konfiguriert ist, um Daten zu erfassen, die sich auf die Behälter (200) in der Ladestation beziehen, und eine Analysevorrichtung, die konfiguriert ist, um die Daten, die von der Lesevorrichtung erfasst werden, zu interpretieren, um die Behälter zu identifizieren.

11. Vorrichtung (10) nach einem der Ansprüche 1 - 10, wobei das Karussell (60) einen Motor (70) beinhaltet und der Motor unter dem Karussell (60) positioniert ist.

12. Vorrichtung (10) nach einem der Ansprüche 1 - 11, wobei die Zentrifuge und das Karussell (60) jeweils von getrennten Motoren (70, 84) angetrieben werden und sich die Zentrifuge zwischen dem Karussell und dem Motor befindet, der verwendet wird, um das Karussell anzutreiben.

13. Verfahren zum automatischen Handhaben eines Behälters (200) in der Vorrichtung (10) nach einem der Ansprüche 1 - 12, wobei das Verfahren Folgendes umfasst:
Drehen des Karussells (60), um den Behälter mit der Achse (A-A) und der Betriebsstrecke des Trägers (40) ausuzfluchten;
Greifen des Behälters mit dem Träger am ersten Standort; und
Transportieren des Behälters vom ersten Standort zum zweiten Standort.

## Revendications

1. Appareil (10) pour la manipulation automatique d'un échantillon dans un réceptacle (200), ledit appareil ayant un axe (A-A) et comprenant :
une base (20) ayant une première extrémité (22) et une deuxième extrémité (24), ledit axe (A-A) s'étendant latéralement entre les première et deuxième extrémités ;
un carrousel (60) supporté sur la base et coupé par l'axe (A-A), ledit carrousel étant configuré pour tourner autour d'un axe de rotation (A_{R}) ; et
un support (42) s'étendant au-dessus du carrousel entre les première et deuxième extrémités de la base, ledit support comprenant un dispositif de support (40) configuré pour se déplacer le long des axes de coordonnées X, Z afin de transporter des réceptacles d'un premier emplacement à un deuxième emplacement ;
dans lequel ledit axe de coordonnées X est parallèle à l'axe (A-A), ledit axe de coordonnées Z est perpendiculaire à l'axe (A-A) et à l'axe de coordonnées X, et lesdits axes de coordonnées X et Z définissent une ligne de fonctionnement, et
dans lequel l'appareil est configuré de sorte que la rotation du carrousel aligne un réceptacle avec la ligne de fonctionnement du dispositif de support pour permettre au dispositif de support de transporter le réceptacle du premier emplacement au deuxième emplacement ; dans lequel l'appareil (10) comprend en outre une centrifugeuse (80) ;
**caractérisé en ce que** la centrifugeuse (80) est positionnée au-dessous du carrousel (60) le long de l'axe (A-A), la centrifugeuse et le carrousel sont chacun configurés pour tourner autour d'un même axe de rotation (A_{R}), et le carrousel définit un vide (68) pour permettre l'accès à la centrifugeuse par le carrousel.

2. Appareil (10) selon la revendication 1, dans lequel la ligne de fonctionnement du dispositif de support (40) est dans le même plan axial que l'axe (A-A).

3. Appareil (10) selon l'une quelconque des revendications 1 à 2, dans lequel le support (42) comprend un premier montant vertical (44a) et un deuxième montant vertical (44b) fixé à la base (20), et le carrousel (60) est agencé entre les premier et deuxième montants verticaux.

4. Appareil (10) selon l'une quelconque des revendications 1 à 3, dans lequel le carrousel (60) comprend une plaque de base (62) et un ou plusieurs plateaux (64) adaptés pour être agencés sur la plaque de base, et chaque plateau définit un ou plusieurs compartiments (66) adaptés pour recevoir les réceptacles (200).

5. Appareil (10) selon la revendication 4, dans lequel le carrousel (60) est configuré de sorte que l'axe de coordonnées Z est perpendiculaire au carrousel (60) et chaque compartiment (66) peut s'aligner avec l'axe (A-A).

6. Appareil (10) selon la revendication 4, dans lequel chaque plateau (64) est configuré pour pouvoir être manuellement retiré de l'appareil par un utilisateur.

7. Appareil (10) selon l'une quelconque des revendications 1 à 6, dans lequel le dispositif de support (40) est un dispositif robotique configuré pour effectuer une translation le long des axes de coordonnées X, Z dans la ligne de fonctionnement correspondant à l'axe (A-A).

8. Appareil (10) selon l'une quelconque des revendications 1 à 7, dans lequel le support (42) comprend un incubateur (100) positionné au-dessus du carrousel (60) le long de l'axe (A-A), ledit incubateur comprenant un boîtier d'incubateur (102) et une plaque d'incubateur (104), ladite plaque d'incubateur étant configurée pour maintenir les réceptacles (200) et pour être mobile entre une première position dans laquelle la plaque d'incubateur est dans le boîtier d'incubateur et une deuxième position dans laquelle la plaque d'incubateur sort du boîtier d'incubateur.

9. Appareil (10) selon l'une quelconque des revendications 1 à 9, comprenant en outre un boîtier (26) et une station de chargement (120) adaptée pour recevoir les réceptacles (200), ledit boîtier définissant une ouverture (122) dans la station de chargement, ladite station de chargement étant configurée pour déplacer les réceptacles de l'ouverture à la position de transport dans laquelle un ou plusieurs réceptacles sont au moins partiellement dans la ligne de fonctionnement.

10. Appareil (10) selon la revendication 9, dans lequel la station de chargement (120) comprend un système d'identification (126) comprenant un lecteur configuré pour acquérir des données concernant les réceptacles (200) dans la station de chargement et un analyseur configuré pour interpréter les données acquises par le lecteur afin de déterminer l'identité des réceptacles.

11. Appareil (10) selon l'une quelconque des revendications 1 à 10, dans lequel le carrousel (60) comprend un moteur (70) et le moteur est positionné sous le carrousel (60).

12. Appareil (10) selon l'une quelconque des revendications 1 à 11, dans lequel la centrifugeuse et le carrousel (60) sont chacun entraînés par des moteurs (70, 84) séparés et la centrifugeuse est positionnée entre le carrousel et le moteur utilisé pour entraîner le carrousel.

13. Procédé pour la manipulation automatique d'un réceptacle (200) dans l'appareil (10) selon l'une quelconque des revendications 1 à 12, ledit procédé comprenant les étapes suivantes :
faire tourner le carrousel (60) pour aligner le réceptacle avec l'axe (A-A) et la ligne de fonctionnement du dispositif de support (40) ;
saisir le réceptacle avec le dispositif de support au premier emplacement ; et
transporter le réceptacle du premier emplacement au deuxième emplacement.
